# EUROPEAN PATENT APPLICATION

(11) **EP 4 506 861 A1**
(43) Date of publication of application: **12.02.2025**
(21) Application number: 23778454.1
(22) Date of filing: 31.03.2023
(51) Int. Cl.: G06N 5/04

(54) **VERIFICATION METHOD, APPARATUS AND DEVICE**

(30) Priority: 02.04.2022 CN 202210351259
(71) Applicant: Vivo Mobile Communication Co., Ltd., Dongguan, Guangdong 523863 (CN)
(72) Inventor: ZHOU, Tong, Dongguan, Guangdong 523863 (CN); SUN, Peng, Dongguan, Guangdong 523863 (CN); SONG, Erhao, Dongguan, Guangdong 523863 (CN)
(74) Representative: Shieldmark
(86) International application number: PCT/CN2023/085456
(87) International publication number: WO 2023/186090

(57) **Abstract**

This application discloses a verification method and apparatus and a device, and belongs to the field of communication technologies. The verification method in embodiments of this application includes: obtaining, by a first device, a verification requirement and a trigger condition for a result of AI model inference, and determining, based on the verification requirement, a verification result corresponding to the model inference result, where the verification requirement indicates a requirement for verifying at least one dimension of data of the model inference result; and sending target information to a second device in a case that the verification result satisfies the trigger condition, where the target information indicates the verification result.

## Description

### CROSS-REFERENCE TO RELATED APPLICATIONS

This application claims priority to Chinese Patent Application No. 202210351259.5 filed in China on April 2, 2022, which is incorporated herein by reference in its entirety.

### TECHNICAL FIELD

This application belongs to the field of communication technologies, and specifically, to a verification method and apparatus and a device.

### BACKGROUND

In combination with artificial intelligence (AI), wireless mobile communication can better improve communication quality, for example, AI-based channel quality compression, AI-based beam management, and AI-based positioning at a physical layer. The beam management is used as an example. In millimeter wave wireless communication, a plurality of analog beams are configured at a communication transceiver end (for example, a base station and a terminal). For a same terminal, channel quality measured in different transmit and receive analog beams varies. How to quickly and accurately select a transceiver beam group with the highest channel quality from all possible transceiver analog beam combinations is a key to affecting transmission quality. After an AI neural network model is introduced, the terminal may effectively predict, based on the AI neural network model, a transceiver analog beam with the highest channel quality, and report the transceiver analog beam with the highest channel quality to a network side, so that better transmission quality can be obtained.

The AI neural network model requires learning and training, and the trained AI neural network model can be used for model inference and prediction. Currently, the AI neural network model is trained by using simulation data, and the trained AI neural network model is directly deployed on a model inference device for use. However, due to complexity of a communication environment, the AI neural network model trained by using the simulation data may not adapt to a communication environment of the model inference device, resulting in a poor effect of model inference and prediction.

### SUMMARY

Embodiments of this application provide a verification method and apparatus and a device, to resolve a problem that an AI neural network model trained by using simulation data may not adapt to a communication environment of an inference device, resulting in a poor effect of inference and prediction.

According to a first aspect, a verification method is provided, including:
obtaining, by a first device, a verification requirement and a trigger condition for a result of artificial intelligence AI model inference, and determining, based on the verification requirement, a verification result corresponding to the model inference result, where the verification requirement indicates a requirement for verifying at least one dimension of data of the model inference result; and
sending target information to a second device in a case that the verification result satisfies the trigger condition, where the target information indicates the verification result.

According to a second aspect, a verification method is provided, including:
receiving, by a second device in a case that a verification result corresponding to a result of artificial intelligence AI model inference satisfies a trigger condition, target information sent by a first device, where the target information indicates the verification result, where
the verification result is determined based on a verification requirement for the model inference result, and the verification requirement indicates a requirement for verifying at least one dimension of data of the model inference result.

According to a third aspect, a verification apparatus is provided, included in a first device, and including:
a determining module, configured to obtain a verification requirement and a trigger condition for a result of artificial intelligence AI model inference, and determine, based on the verification requirement, a verification result corresponding to the model inference result, where the verification requirement indicates a requirement for verifying at least one dimension of data of the model inference result; and
a sending module, configured to send target information to a second device in a case that the verification result satisfies the trigger condition, where the target information indicates the verification result.

According to a fourth aspect, a verification apparatus is provided, included in a second device, and including:
a receiving module, configured to receive, by the second device in a case that a verification result corresponding to a result of artificial intelligence AI model inference satisfies a trigger condition, target information sent by a first device, where the target information indicates the verification result, where
the verification result is determined based on a verification requirement for the model inference result, and the verification requirement indicates a requirement for verifying at least one dimension of data of the model inference result.

According to a fifth aspect, a first device is provided. The first device includes a processor and a memory, the memory stores a program or instructions executable on the processor, and the program or the instructions, when executed by the processor, implement the steps of the method according to the first aspect.

According to a sixth aspect, a first device is provided, including a processor and a communication interface. The processor is configured to obtain a verification requirement and a trigger condition for a result of artificial intelligence AI model inference, and determine, based on the verification requirement, a verification result corresponding to the model inference result, where the verification requirement indicates a requirement for verifying at least one dimension of data of the model inference result; and the communication interface is configured to send target information to a second device in a case that the verification result satisfies the trigger condition, where the target information indicates the verification result.

According to a seventh aspect, a second device is provided. The second device includes a processor and a memory, the memory stores a program or instructions executable on the processor, and the program or the instructions, when executed by the processor, implement the steps of the method according to the second aspect.

According to an eighth aspect, a second device is provided, including a processor and a communication interface. The communication interface is configured to receive, in a case that a verification result corresponding to a result of artificial intelligence AI model inference satisfies a trigger condition, target information sent by a first device, where the target information indicates the verification result, where the verification result is determined based on a verification requirement for the model inference result, and the verification requirement indicates a requirement for verifying at least one dimension of data of the model inference result.

According to a ninth aspect, a verification system is provided, including: a first device and a second device. The first device may be configured to perform the steps of the verification method according to the first aspect, and the second device may be configured to perform the steps of the verification method according to the second aspect.

According to a tenth aspect, a readable storage medium is provided. The readable storage medium stores a program or instructions, where the program or the instructions, when executed by a processor, implement the steps of the method according to the first aspect, or implement the steps of the method according to the second aspect.

According to an eleventh aspect, a chip is provided. The chip includes a processor and a communication interface, where the communication interface is coupled to the processor, and the processor is configured to run a program or instructions, to implement the method according to the first aspect, or implement the method according to the second aspect.

According to a twelfth aspect, a computer program/program product is provided. The computer program/program product is stored in a storage medium, the computer program/program product is executed by at least one processor to implement the steps of the information feedback method according to the first aspect, or the computer program/program product is executed by at least one processor to implement the steps of the verification method according to the second aspect.

In this embodiment of this application, a first device obtains a verification requirement and a trigger condition for a result of artificial intelligence AI model inference, and determines, based on the verification requirement, a verification result corresponding to the model inference result, where the verification requirement indicates a requirement for verifying at least one dimension of data of the model inference result; and sends target information to a second device in a case that the verification result satisfies the trigger condition, where the target information indicates the verification result. In this way, the first device verifies the data in the at least one dimension output by the AI model, and reports the data in the at least one dimension output by the AI model to the second device when the verification result satisfies the trigger condition, so that the AI model can be verified on an inference device, to improve an inference and prediction effect of the AI model.

### BRIEF DESCRIPTION OF THE DRAWINGS

FIG. 1 is a block diagram of a wireless communication system to which an embodiment of this application may be applied;
FIG. 2 is a flowchart 1 of a verification method according to an embodiment of this application;
FIG. 3 is a flowchart 2 of a verification method according to an embodiment of this application;
FIG. 4 is a diagram 1 of a structure of a verification apparatus according to an embodiment of this application;
FIG. 5 is a diagram 2 of a structure of a verification apparatus according to an embodiment of this application;
FIG. 6 is a structural diagram of a communication device according to an embodiment of this application;
FIG. 7 is a schematic diagram of a structure of a terminal according to an embodiment of this application; and
FIG. 8 is a schematic diagram of a structure of a network side device according to an embodiment of this application.

### DETAILED DESCRIPTION

The technical solutions in embodiments of this application are clearly described below with reference to the accompanying drawings in embodiments of this application. Apparently, the described embodiments are merely some rather than all of embodiments of this application. All other embodiments obtained by a person of ordinary skill in the art based on embodiments of this application shall fall within the protection scope of this application.

In the specification and claims of this application, terms "first" and "second" are used to distinguish similar objects, but are not used to describe a specific sequence or order. It may be understood that the terms used in such a way is interchangeable in proper circumstances, so that embodiments of this application can be implemented in other sequences than the sequence illustrated or described herein. In addition, objects distinguished by "first" and "second" are usually of Type, and the number of objects is not limited. For example, a first object may be one or more than one. In addition, in the specification and claims, "and/or" means at least one of the connected objects, and the character "/" generally indicates an "or" relation between associated objects.

It should be noted that, the technology described in embodiments of this application is not limited to a long term evolution (Long Term Evolution, LTE)/LTE evolution (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in embodiments of this application are often used interchangeably, and the described technologies may be used both for the systems and radio technologies mentioned above and may also be used for other systems and radio technologies. The following descriptions describe a new radio (New Radio, NR) system for the objective of being used as an example, and NR terms are used in most of the descriptions below. However, these technologies may also be applied to applications other than NR system applications, such as a 6^{th} generation (6^{th} Generation, 6G) communication system.

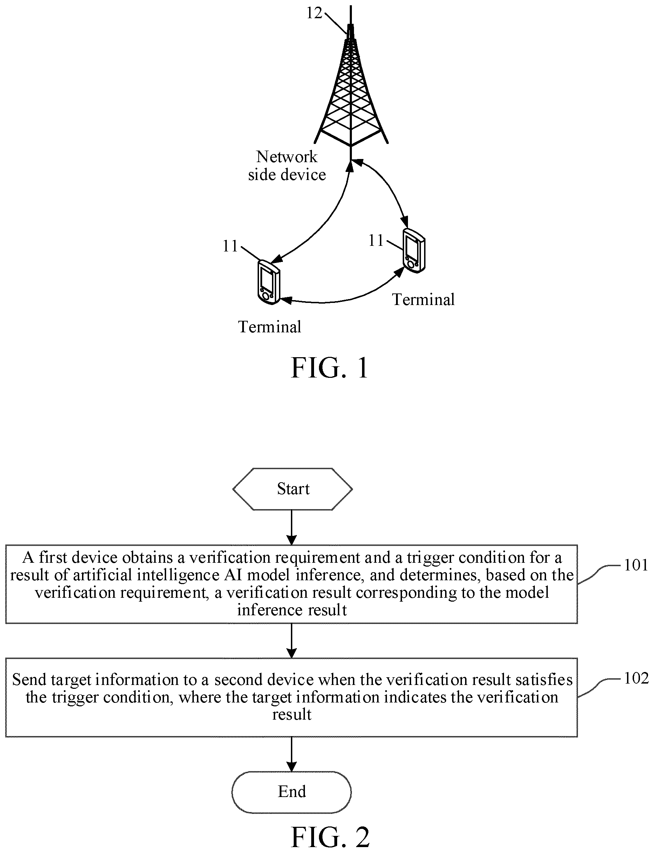

FIG. 1 is a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a washing machine, or a piece of furniture), a game console, a personal computer (personal computer, PC), a cash machine, or a self-service machine. The wearable device includes: a smart watch, a smart bracelet, smart headphones, smart glasses, smart jewelry (a smart bracelet, a smart bracelet, a smart ring, a smart necklace, a smart anklet, a smart anklet, and the like), a smart wristband, smart clothing, and the like. It should be noted that, in embodiments of this application, a specific type of the terminal 11 is not limited. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or some other proper terms in the field. Provided that the same technical effect is achieved, the base station is not limited to a specific technology vocabulary. It should be noted that, in embodiments of this application, only a base station in the NR system is used as an example for description, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rule function (Policy and Charging Rule Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in embodiments of this application, only a core network device in the NR system is used as an example for description, and a specific type of the core network device is not limited.

The verification method and apparatus and the device provided in embodiments of this application are described in detail below by using some embodiments and application scenarios thereof with reference to the accompanying drawings.

FIG. 2 is a flowchart of a verification method according to an embodiment of this application. As shown in FIG. 2, the verification method includes the following steps.

Step 101: A first device obtains a verification requirement and a trigger condition for a result of artificial intelligence AI model inference, and determines, based on the verification requirement, a verification result corresponding to the model inference result, where the verification requirement indicates a requirement for verifying at least one dimension of data of the model inference result.

The model inference result may be a result obtained by performing inference by the first device by using the AI model. The trigger condition may be configured for representing a condition for reporting target information to a second device. The trigger condition may include a verification indicator, a minimum number of verifications, and the like. The verification result may be a result obtained by verifying the model inference result. For example, the verification result may be represented by an error, an accuracy rate, or a precision rate. The verification result may be obtained by calculating the model inference result and label data. An example in which the verification result includes the error is used. The verification result may be a difference between the label data and the model inference result.

In an implementation, the verification requirement may include a verification object. The verification object indicates a to-be-verified object. The verification object may include at least one of the following:
a dimension of data output by AI model inference; a number of dimensions of data output by the AI model inference and an order of the dimensions of data output by the AI model inference; a target sorting manner of data in each dimension of data output by the AI model inference; a maximum number of pieces of data in each dimension of data output by the AI model inference; and an interval of data in each dimension of data output by the AI model inference.

In an implementation, the verification requirement may further include a verification method. The verification method indicates a manner for verifying the data in the at least one dimension output by the model inference result. The verification method may include at least one of the following: a label data indication of the AI model; a label delay indication of the AI model; an output data processing indication of the AI model; verification duration; a number of verification samples; and a calculation manner of a verification indicator.

Step 102: Send the target information to the second device in a case that the verification result satisfies the trigger condition, where the target information indicates the verification result.

The verification requirement may be configured for verifying validity of the AI model inference, and/or may verify whether the AI model inference is invalid. The first device implements the verification requirement, to obtain the verification result, and reports the target information indicating the verification result to the second device. Therefore, the second device can determine the validity of the AI model inference and/or whether the AI model inference is invalid based on the target information.

In an implementation, the target information may include the result of the AI model inference and/or a number of pieces of data satisfying the verification indicator.

It should be noted that, the target information is sent to the second device in a case that the verification result satisfies the trigger condition, so that a verification status is reported based on an event trigger, and problems of verification and monitoring after the AI model is deployed can be resolved.

It should be noted that, the first device may be used as an inference end of the AI model. the trigger condition is received at the model inference end of the AI model, the model inference result is observed and the verification result is calculated, and verification or monitoring information is reported after the verification result satisfies the trigger condition. In embodiments of this application, validity of a multi-dimensional prediction result can be verified, monitored, and reported at the model inference end of the AI model, multi-dimensional channel quality can be predicted by using AI, and network performance deterioration caused by instability of a multi-dimensional result of the model inference of the model can be avoided.

In addition, the first device may be a terminal, a base station, a core network element (for example, a network data analytics function (Network Data Analytics Function, NWDAF)), or the like. The second device may be a base station, a self-organized network (Self-Organized Network, SON), an operation administration and maintenance (Operation Administration and Maintenance, OAM) system, a core network element (for example, an NWDAF), or the like.

In this embodiment of this application, a first device obtains a verification requirement and a trigger condition for a result of artificial intelligence AI model inference, and determines, based on the verification requirement, a verification result corresponding to the model inference result, where the verification requirement indicates a requirement for verifying at least one dimension of data of the model inference result; and sends target information to a second device in a case that the verification result satisfies the trigger condition, where the target information indicates the verification result. In this way, the first device verifies the data in the at least one dimension output by the AI model, and reports the data in the at least one dimension output by the AI model to the second device in a case that the verification result satisfies the trigger condition, so that the AI model can be verified on an inference device, to improve an inference and prediction effect of the AI model.

Optionally, the trigger condition includes at least one of the following:
a verification indicator; and
a minimum number of verifications.

The verification indicator may indicate an indicator threshold of each dimension of data via the AI model inference. The minimum number of verifications may indicate a minimum number of successful verifications that is required by each dimension of data via the AI model inference. For example, the minimum number of verifications in a dimension of the AI model inference may be a total number of pieces of data in the dimension. In a case that the data in the dimension satisfies the verification indicator, reporting of the target information can be triggered.

In addition, in a case that the verification requirement is configured for verifying the validity of the AI model inference, the verification indicator is an indicator for verifying the validity of the model inference; and in a case that the verification requirement is configured for verifying whether the AI model inference is invalid, the verification indicator is an indicator for verifying whether the model inference is invalid.

In this implementation, an indicator threshold for reporting the target information may be determined based on the verification indicator, and the minimum number of successful verifications that is required for reporting the target information may be determined based on the minimum number of verifications. Therefore, the first device can trigger reporting of the target information in a case that the verification indicator and/or the minimum number of verifications are/is satisfied.

Optionally, the verification indicator includes at least one of the following:
an indicator threshold of each piece of dimension data via model inference;
an indicator threshold vector of each dimension of data via the AI model inference; and
a comprehensive indicator threshold of a plurality of dimensions of data via the AI model inference.

In a case that the verification indicator includes the indicator threshold of each dimension of data via the AI model inference, indicator thresholds of different values in a same dimension are the same. In a case that the verification indicator includes an indicator threshold vector of each dimension of data via the AI model inference, indicator thresholds of different values in the same dimension may be the same or may be different. The indicator threshold may be represented by one value, and the indicator threshold vector may be represented by a one-dimensional vector. For example, a dimension includes 10 pieces of data, and a calculation manner of the verification indicator is an error. If the verification indicator includes one indicator threshold of the dimension, errors of the 10 pieces of data are respectively compared with the indicator threshold, to determine whether the verification indicator is satisfied. If the verification indicator includes an indicator threshold vector of each dimension, and the indicator threshold vector is a one-dimensional vector including 10 elements, the errors of the 10 pieces of data are respectively compared with the 10 elements, to determine whether the verification indicator is satisfied.

In addition, the comprehensive indicator threshold of the plurality of dimensions of data via the AI model inference may include at least one of the following:
a one-dimensional comprehensive indicator threshold; and
a multi-dimensional comprehensive indicator threshold.

The one-dimensional comprehensive indicator threshold may be obtained by performing a plurality of times of Kronecker products on indicator threshold vectors of the plurality of dimensions of data via the AI model inference in a dimension order. The multi-dimensional comprehensive indicator threshold may be an array formed by using the indicator threshold vectors of the plurality of dimensions of data via the AI model inference in a multi-dimensional array manner.

It should be noted that, the first device may determine the comprehensive indicator threshold of the plurality of dimensions of data via the AI model inference according to the verification indicator. A manner of determining the comprehensive indicator threshold of the plurality of dimensions of data via the AI model inference according to the verification indicator may include at least one of the following:
the verification indicator directly includes the comprehensive indicator threshold of the plurality of dimensions of data via the AI model inference;
the verification indicator includes the indicator threshold vector of each dimension of data via the AI model inference, and the comprehensive indicator threshold of the plurality of dimensions of data via the AI model inference is determined according to the indicator threshold vector of each dimension; and
the verification indicator includes the indicator threshold of each dimension of data via the AI model inference, and the comprehensive indicator threshold of the plurality of dimensions of data via the AI model inference is determined according to the indicator threshold of each dimension.

In an implementation, that the comprehensive indicator threshold of the plurality of dimensions of data via the AI model inference is determined according to the indicator threshold of each dimension may be: duplicating and expanding the indicator threshold of each dimension into one vector according to a maximum number of pieces of data in the dimension, to obtain the indicator threshold vector of each dimension, and determining the comprehensive indicator threshold of the plurality of dimensions of data via the AI model inference according to the indicator threshold vector of each dimension. For example, if an indicator threshold of a dimension is 0.8, and a maximum number of pieces of data in the dimension is 3, an indicator threshold vector of the dimension is (0.8, 0.8, 0.8).

In an implementation, a manner of determining the comprehensive indicator threshold of the plurality of dimensions of data via the AI model inference according to the indicator threshold vector of each dimension may include at least one of the following:
performing a plurality of times of Kronecker products on the indicator threshold vector of each dimension in a dimension order to obtain a one-dimensional comprehensive indicator threshold, and using the one-dimensional comprehensive indicator threshold as the comprehensive indicator threshold of the plurality of dimensions of data via the AI model inference; and
constructing the indicator threshold vector of each dimension as a multi-dimensional array in the dimension order, and using the multi-dimensional array as the comprehensive indicator threshold of the plurality of dimensions of data via the AI model inference.

The constructing the indicator threshold vector of each dimension as a multi-dimensional array in the dimension order may be constructing the multi-dimensional array. A subscript order of each element of the multi-dimensional array is consistent with the dimension order. A subscript value of the dimension is read for each element, an indicator threshold in an indicator threshold vector of a corresponding dimension is indexed through the subscript value, and the indicator threshold of each dimension is multiplied to obtain a value of the element. Indicator threshold vectors a and b of two dimensions are used as an example. The vector a is (a1, a2), and the vector b is (b1, b2). A constructed multi-dimensional array c is an array of 2 rows and 2 columns. The multi-dimensional array c includes four elements c11, c12, c21, and c22. c11 is a product of a1 and b1, c12 is a product of a1 and b2, c21 is a product of a2 and b1, and c22 is a product of a2 and b2.

In an implementation, the verification indicator may further include a manner indication that the verification indicator is satisfied. The manner indication that the verification indicator is satisfied may include any one of the following:
being less than or equal to a verification indicator means that the verification indicator is satisfied; and
being greater than a verification indicator means that the verification indicator is satisfied.

In an implementation, the verification indicator may further include a manner indication that the verification indicator is satisfied. The manner indication that the verification indicator is satisfied may include any one of the following:
being less than a verification indicator means that the verification indicator is satisfied; and
being greater than or equal to a verification indicator means that the verification indicator is satisfied.

For example, in a case that the verification requirement is configured for verifying validity of the AI model inference, and
in a case that the calculation manner of the verification indicator is any one of an error, an error mean, an average absolute error, an absolute average error, and a root mean square error, being less than or equal to a verification indicator means that the verification indicator is satisfied; and
in a case that the calculation manner of the verification indicator is any one of a correlation, an accuracy rate, a precision rate, and a recall rate, being greater than a verification indicator means that the verification indicator is satisfied.

For example, in a case that the verification requirement is configured for verifying whether the AI model inference is invalid, and
in a case that the calculation manner of the verification indicator is any one of an error, an error mean, an average absolute error, an absolute average error, and a root mean square error, being greater than or equal to a verification indicator means that the verification indicator is satisfied; and
in a case that the calculation manner of the verification indicator is any one of a correlation, an accuracy rate, a precision rate, and a recall rate, being less than a verification indicator means that the verification indicator is satisfied.

In this implementation, the data in the at least one dimension output by the model inference result may be verified through at least one of the indicator threshold of each dimension of data via the AI model inference, the indicator threshold vector of each dimension of data via the AI model inference, and the comprehensive indicator threshold of the plurality of dimensions of data via the AI model inference.

Optionally, the obtaining, by a first device, a verification requirement and a trigger condition for a result of AI model inference includes:
receiving, by the first device, the verification requirement and the trigger condition for the result of the AI model inference sent by a third device.

The third device and the second device may be the same device, or the third device and the second device may not be the same device. The first device may be configured for the AI model inference and reporting of the model inference result, the second device may be configured for receiving of an event of the AI model inference, and the third device may be configured for sending of the verification requirement and the trigger condition.

In addition, the third device may be a base station, a self-organized network (Self-Organized Network, SON), an operation administration and maintenance (Operation Administration and Maintenance, OAM) system, a core network element (for example, an NWDAF), or the like.

In this implementation, the first device receives the verification requirement and the trigger condition from the third device, so that a verification task can be delivered through the third device.

Optionally, the verification requirement is configured for verifying at least one of the following:
validity of AI model inference; and
whether the AI model inference is invalid.

It should be noted that, for an AI model obtained by training based on simulation data or based on partial area data, for example, using an AI model trained in a scenario A in a scenario B may lead to a poor inference effect of the AI model. If the AI model is directly used without being verified based on data of the cell, network performance of the cell may be drastically deteriorated. The verification requirement is sent to the first device to verify the validity of the AI model inference, so that the AI model can be verified by using an actual network environment of the first device, to improve an inference effect of the AI model inference on the first device.

In addition, as a user moves and data traffic changes in the cell, the AI model that is successfully verified for the first time cannot be ensured to be valid all the time. Due to complexity and time variance of a communication environment, that an AI model trained in one time period performs inference in another time period may lead to a poor inference effect of the AI model. For example, an AI model obtained by training for a morning peak at 8 am may have poor applicability in a scenario that is idle at 12 am. The verification requirement is sent to the first device to verify whether the AI model inference is invalid, so that the validity of the AI model inference can be verified, to ensure an inference effect of the AI model inference on the first device.

Optionally, the verification requirement includes at least one of the following:
a dimension of data output by AI model inference;
a number of dimensions of data output by the AI model inference and an order of the dimensions of data output by the AI model inference;
a target sorting manner of data in each dimension of data output by the AI model inference;
a maximum number of pieces of data in each dimension of data output by the AI model inference; and
an interval of data in each dimension of data output by the AI model inference.

The target sorting manner of the data in each dimension of data output by the AI model inference may include at least one of the following:
sorting in ascending order according to a length of duration from a current time point;
sorting in descending order according to channel quality; and
sorting in ascending order according to an indicator ID of the data.

For example, an example in which the verification requirement includes a dimension, namely, a time dimension output by the AI model inference is used. The first device may verify data in the time dimension in the model inference result, to obtain a verification result, so that the first device can verify the model inference result according to the dimension delivered by the third device. An example in which the verification requirement includes a number of dimensions of data output by the AI model inference and the order of the dimensions of data output by the AI model inference is used. The first device may verify the model inference result according to the number of dimensions of data output by the AI model inference and in the order of the dimensions of data output by the AI model inference in the verification requirement, so that the first device can verify the model inference result according to the number of dimensions delivered by the third device and in the dimension order, and determine whether the verification result satisfies the trigger condition. An example in which the verification requirement includes a target sorting manner of the data in each dimension of data output by the AI model inference is used. The first device may sequentially determine, in the target sorting manner in the verification requirement, whether the data in each dimension satisfies the indicator threshold, and determine, according to the number of pieces of data that satisfies the indicator threshold, whether the trigger condition for reporting the target information is satisfied. An example in which the verification requirement includes a maximum number of pieces of data in each dimension of data output by the AI model inference is used. The first device may verify the model inference result according to the maximum number of pieces of data in each dimension in the verification requirement, so that the first device can determine a number of pieces of data for verifying the model inference result according to the maximum number delivered by the third device. An example in which the verification requirement includes the interval of data in each dimension of data output by the AI model inference is used. The first device may determine to-be-verified data in the model inference result according to the interval of data in the verification requirement, so that the first device can verify the model inference result according to the interval of data in each dimension delivered by the third device, and determine whether the verification result satisfies the trigger condition.

In this implementation, an object that needs to be verified may be determined through one or more of the dimension output by the AI model inference, the number of dimensions of data output by the AI model inference and the order of the dimensions of data output by the AI model inference, the target sorting manner of the data in each dimension of data output by the AI model inference, the maximum number of pieces of data in each dimension of data output by the AI model inference, and the interval of data in each dimension of data output by the AI model inference. For example, an example in which the verification requirement includes a dimension, namely, a time dimension output by the AI model inference is used. The first device needs to verify data in the time dimension.

Optionally, the dimension output by the AI model inference includes at least one of the following:
a time dimension;
a frequency dimension;
a cell dimension;
a beam dimension;
a delay dimension; and
a Doppler dimension.

Optionally, the verification requirement includes at least one of the following:
a label data indication of the AI model;
a label delay indication of the AI model;
an output data processing indication of the AI model;
verification duration;
a number of verification samples; and
a calculation manner of a verification indicator.

The label data indication of the AI model may indicate label data of the AI model. The label delay indication of the AI model may indicate a delay for obtaining the label data of the AI model. The label data of the AI model may be obtained through the label data indication of the AI model and/or the label delay indication of the AI model. The output data processing indication of the AI model may indicate a manner of processing output data of the AI model. The output data processing indication of the AI model may indicate at least one of the following: a filtering method; and a zoom method.

In addition, verification duration may indicate duration for verifying the AI model. For example, the verification duration may be 2 hours, or may be a time period between 8:00 and 10:00. A number of verification samples may indicate a number of samples for verifying the AI model. For example, the number of verification samples may be 1000, and the first device needs to verify 1000 samples. The calculation manner of the verification indicator may indicate the calculation manner of the verification indicator.

In an implementation, the calculation manner of the verification indicator may include at least one of the following:
an error (Error);
an error mean (Bias);
a mean absolute percentage error (Mean Absolute Percentage Error, MAPE);
a mean absolute error (Mean Absolute Error, MAE);
a root mean squared error (Root Mean Squared Error, RMSE);
a correlation;
an accuracy rate;
a precision rate; and
a recall rate.

Optionally, a label data indication of the AI model indicates at least one of the following:
a reference signal received power (Reference Signal Received Power, RSRP) of a beam channel;
reference signal received quality (Reference Signal Received Quality, RSRQ) of the beam channel;
a signal-to-interference and noise ratio (Signal-to-interference and noise ratio, SINR) of the beam channel;
RSRP of a cell channel;
RSRQ of the cell channel;
SINR of the cell channel;
a received signal strength indication (Received Signal Strength Indication, RSSI) of the cell channel;
an impulse response of the cell channel;
a precoding matrix indicator (Precoding matrix indicator, PMI);
a rank indicator (Rank indicator, RI); and
a channel quality indicator (Channel quality indicator, CQI).

Optionally, the target information includes at least one of the following:
a number of actually measured and verified for each dimension of data via AI model inference ;
a sorting result of data that is in each dimension of data via the AI model inference and that is sorted in a target sorting manner;
a comprehensive inference result of a plurality of dimensions of data via the AI model inference;
an indicator threshold of each dimension of data via the AI model inference;
a comprehensive indicator threshold of a plurality of dimensions of data via the AI model inference;
a verification result of the plurality of dimensions of data via the AI model inference;
a label data indication of the AI model;
a label delay indication of the AI model;
an output data processing indication of the AI model;
verification duration;
a number of verification samples; and
a calculation manner of a verification indicator;
an invalid indicator;
a valid indicator; and
a minimum number of verifications.

In a case that the verification requirement is configured for verifying whether the AI model inference is invalid, if the verification result satisfies the trigger condition, the target information may carry the invalid indicator, and the invalid indicator is configured for representing that the AI model inference is invalid.

In addition, in a case that the verification requirement is configured for verifying the validity of the AI model inference, if the verification result satisfies the trigger condition, the target information may carry a valid indicator, and the valid indicator is configured for representing that AI model inference is accurate.

In addition, a comprehensive inference result of the plurality of dimensions of data via the AI model inference may be represented in at least one of the following manners:

obtaining in the dimension order and by sequentially arranging the number of pieces of data that satisfies the trigger condition in each dimension; and
forming a data structure in the dimension order and according to the maximum number of pieces of data in each dimension, where an assigned value is the model inference result, an element that does not satisfy the verification condition is an assigned value that is invalid.

Optionally, a label delay of the AI model indicates at least one of the following:
a delay between an end of the model inference and obtaining label data; and
a delay between receiving input data of the AI model and obtaining the label data.

The delay between the end of the model inference and obtaining the label data may be a delay between the end of the model inference by the first device and obtaining the label data by the first device. The delay between receiving the input data of the AI model and obtaining the label data may be a delay between receiving the input data of the AI model by the first device and obtaining the label data by the first device.

Optionally, the trigger condition includes a comprehensive indicator threshold of a plurality of dimensions of AI model inference, and the determining, based on the verification requirement, a verification result corresponding to the model inference result includes:

verifying the model inference result based on the verification requirement, to obtain verification results of the plurality of dimensions, where data structures of the verification results are the same as that of the comprehensive indicator threshold.

The verification result is the same as the data structure of the comprehensive indicator threshold. For example, if the data structure of the comprehensive indicator threshold is an array of 3 rows and 3 columns, the verification result is also an array of 3 rows and 3 columns. Through the same data structure, it is convenient to compare the verification result with the comprehensive indicator threshold.

Optionally, the trigger condition further includes a minimum number of verifications, and the sending target information to a second device in a case that the verification result satisfies the trigger condition includes:
determining a measured number of successful verifications of each dimension of data via the AI model inference based on the verification results of the plurality of dimensions and the comprehensive indicator threshold; and
sending the number of pieces of actually measured and verified data to the second device in a case that the number of pieces of actually measured and verified data is greater than or equal to the minimum number of verifications.

The minimum number of verifications may include a minimum number of verifications of each dimension, and the measured number of successful verifications of each dimension may be sent to the second device in a case that the measured number of successful verifications of each dimension is greater than or equal to the minimum number of verifications of each dimension; and the trigger condition is not satisfied in a case that the measured number of successful verifications of each dimension is less than the minimum number of verifications of each dimension, and the measured number of successful verifications of each dimension is not sent to the second device.

In an implementation, the determining a measured number of successful verifications of each dimension of data via the AI model inference based on the verification results of the plurality of dimensions and the comprehensive indicator threshold may include the following process.
(1) A minimum verification set is generated according to the minimum number of verifications of each dimension, and it is determined whether values in the minimum verification set in the verification result of the plurality of dimensions are greater than or equal to a corresponding indicator threshold in the comprehensive indicator threshold. If yes, the measured number of successful verifications of each dimension is initialized as the minimum number of verifications of each dimension; and if no, calculation is exited.
(2) A current test dimension is initialized as a first dimension in the dimension order, namely, the first dimension.
(3) A verification result is determined to verify an element position:
   A position indicator of a verification element of a current test dimension=a number of measured number of successful verifications of the current test dimension+1; and
   position indicators of verification elements of another dimension=all positions corresponding to the measured number of successful verifications of a corresponding dimension.
(4) Whether a value of the verification element of the verification result is greater than or equal to the corresponding value in the comprehensive indicator threshold is checked. If yes, the number of measured number of successful verifications of the current dimension is added by 1; and if no, calculation is ended.
(5) It is determined whether the measured number of successful verifications of the current test dimension reaches a maximum value of a number of elements of this dimension. If yes, the current test dimension is assigned as a next dimension in the dimension order; and if no, (3) continues to be performed.

In this implementation, the measured number of successful verifications is sent to the second device in a case that the measured number of successful verifications is greater than or equal to a minimum number of verifications. A greater measured number of successful verifications indicates higher validity of the AI model inference. In this way, the second device can determine the validity of the AI model inference based on the measured number of successful verifications.

Optionally, the sending target information to a second device in a case that the verification result satisfies the trigger condition includes:
sending the target information to the second device in a case that a target dimension exists in multi-dimensions of output data of model inference, where a verification result of the target dimension and a comprehensive indicator threshold corresponding to the target dimension satisfy a pre-defined condition.

That a verification result of the target dimension and a comprehensive indicator threshold corresponding to the target dimension satisfy a pre-defined condition may be that the verification result of the target dimension satisfies the comprehensive indicator threshold corresponding to the target dimension. In a case that a manner of satisfying the verification indicator indicates that being less than or equal to a verification indicator is that the verification indicator is satisfied, and in a case that the verification result of the target dimension is less than or equal to the comprehensive indicator threshold corresponding to the target dimension, it is considered that the verification result of the target dimension satisfies the comprehensive indicator threshold corresponding to the target dimension. In a case that a manner of satisfying the verification indicator indicates that being greater than a verification indicator is that the verification indicator is satisfied, and in a case that the verification result of the target dimension is greater than the comprehensive indicator threshold corresponding to the target dimension, it is considered that the verification result of the target dimension satisfies the comprehensive indicator threshold corresponding to the target dimension.

In addition, in a case that the verification requirement is configured for verifying whether the AI model inference is invalid, the target information may be sent to the second device in a case that a target dimension exists in multi-dimensions of output data of model inference, where a verification result of the target dimension and a comprehensive indicator threshold corresponding to the target dimension satisfy a pre-defined condition. In this way, reporting of a case that inference is invalid can be triggered in a case that the data in the at least one dimension satisfies a condition that the model inference is invalid.

The following describes the verification method in embodiments of this application through two specific embodiments.

### Embodiment 1

The first device performs data collection based on the verification requirement, and verifies the collected data, to obtain a verification result. Target information is sent to the second device in a case that the verification result satisfies the trigger condition.

A process of performing data collection may be as follows.
(1) Preprocessed input data is transmitted to the AI model to obtain an inference result;
(2) label data is obtained according to the label data indication of the AI model and the label delay indication of the AI model in the verification requirement;
(3) the model inference result and the label data are recorded as a set of samples; and
(4) the data collection process is ended according to verification duration or a number of verification samples in the verification requirement.

A process of verifying the collected data to obtain the verification result may be as follows.
(1) The model inference result and the label data are separately filtered according to a filtering method of an output data processing indication of the AI model in the verification requirement; and
(2) the collected data is calculated in the calculation manner of the verification indicator in the verification requirement, to obtain the verification result.

### Embodiment 2

A first device obtains a verification requirement and a trigger condition for a result of artificial intelligence AI model inference, and determines, based on the verification requirement, a verification result corresponding to the model inference result, where the verification requirement indicates a requirement for verifying at least one dimension of data of the model inference result.

The at least one dimension may be two dimensions. The two dimensions are a first dimension and a second dimension. The first dimension is a time dimension, and the second dimension is a beam (Beam) dimension. The verification requirement includes a target sorting manner of data in each dimension of data output by the AI model inference. The target sorting manner corresponding to the first dimension is sorting in ascending order of duration from a current time point, and a target sorting manner corresponding to the second dimension is sorting in descending order of channel quality. A minimum number of first dimensions that are reported is 2, and a minimum number of second dimensions that are reported is 2.

The verification result may be a verification result of a plurality of dimensions, as shown in Table 1.

**Table 1**

| | Beam 1 | Beam 2 | Beam 3 | Beam 4 |
|---|---|---|---|---|
| T1 | 0.95 | 0.94 | 0.93 | 0.6 |
| T2 | 0.94 | 0.9 | 0.8 | 0.8 |
| T3 | 0.92 | 0.9 | 0.6 | 0.6 |

T1 to T3 represent time dimensions, and Beam 1 to Beam 4 represent beam dimensions.

The trigger condition may include a comprehensive indicator threshold of the plurality of dimensions. The comprehensive indicator threshold is shown in Table 2.

**Table 2**

| | Beam 1 | Beam 2 | Beam 3 | Beam 4 |
|---|---|---|---|---|
| T1 | 0.9 | 0.9 | 0.9 | 0.9 |
| T2 | 0.9 | 0.9 | 0.9 | 0.9 |
| T3 | 0.9 | 0.9 | 0.9 | 0.9 |

The first device may determine a measured number of successful verifications of each dimension of data via the AI model inference based on the verification results of the plurality of dimensions and the comprehensive indicator threshold. For example, a process of determining the measured number of successful verifications of each dimension of data via the AI model inference may be as follows.
(1) A minimum verification set is generated according to the minimum number of verifications of each dimension, and it is determined whether values in the minimum verification set in the verification result of the plurality of dimensions are greater than or equal to a corresponding indicator threshold in the comprehensive indicator threshold. If yes, the measured number of successful verifications of each dimension is initialized as the minimum number of verifications of each dimension; and if no, calculation is exited.
   For Table 1 and Table 2, whether corresponding verification results of T1 and T2 in the first dimension, and the beam 1 and the beam 2 in the second dimension are greater than or equal to the corresponding comprehensive indicator threshold is checked, that is, it is determined whether the verification result (T1, beam 1) is greater than or equal to the comprehensive indicator threshold (T1, beam 1), whether the verification result (T2, beam 1) is greater than or equal to the comprehensive indicator threshold (T2, beam 1), whether the verification result (T1, beam 2) is greater than or equal to the comprehensive indicator threshold (T1, beam 2), and whether the verification result (T2, beam 2) is greater than or equal to the comprehensive indicator threshold (T2, beam 2). It can be learnt from Table 1 and Table 2 that, the corresponding verification results of T1 and T2 in the first dimension, and the beam 1 and the beam 2 in the second dimension are greater than or equal to the corresponding comprehensive indicator threshold, and a case that a measured number of successful verifications in the first dimension is 2, and a measured number of successful verifications in the second dimension is 2 is defined.
(2) A current test dimension is initialized as the first dimension.
(3) A verification result is determined to verify an element position:

A position indicator of a verification element of a current test dimension=a measured number of successful verifications of the current test dimension+1, that is, a verification element of the first dimension is T3; and
other dimensions are all element positions corresponding to the measured number of successful verifications of a corresponding dimension.

Position indicators of verification elements of the second dimension=all elements corresponding to the measured number of successful verifications of the second dimension. That is, the verification elements of the second dimension are the beam 1 and the beam 2.

Expansion is started from the first time dimension, and the verification elements are determined to be verification results (T3, beam 1) and (T3, beam 2).

(4) Whether a value of the verification element of the verification result is greater than or equal to the corresponding value in the comprehensive indicator threshold is checked. If yes, the number of measured number of successful verifications of the first dimension is added by 1; and if no, calculation is ended.

For the verification results (T3, beam 1) and (T3, beam 2), a case that the verification result (T3, beam 1) is greater than the comprehensive indicator threshold (T3, beam 1) is checked, and the verification result (T3, beam 2) is greater than the comprehensive indicator threshold (T3, beam 2). In this case, the number of measured number of successful verifications of the first dimension is added by 1.

(5) If it is determined that the measured number of successful verifications of the current dimension reaches a maximum value of a number of elements of this dimension, the current test dimension is assigned as a next dimension in the dimension order. That is, the current test dimension is assigned as the second dimension, namely, the beam dimension. Step (3) is performed again:
determine a verification result to verify an element position:

A position indicator of a verification element of a current test dimension=a measured number of successful verifications of the current test dimension+1, that is, the verification element of the second dimension is the beam 3; and
other dimensions are all element positions corresponding to the measured number of successful verifications of this dimension.

Position indicators of verification elements of the first dimension=all elements corresponding to the measured number of successful verifications of the first dimension. That is, the verification elements of the first dimension are T1, T2, and T3.

Extension is started from the second beam dimension, and it is determined that the verification elements are verification results (T1, beam 3), (T2, beam 3), and (T3, beam 3).

(6) Whether a value of the verification element of the verification result is greater than or equal to the corresponding value in the comprehensive indicator threshold is checked. If yes, the number of measured number of successful verifications of the first dimension is added by 1; and if no, calculation is ended.

For the verification results (T1, beam 3), (T2, beam 3), and (T3, beam 3), a case that the verification result (T1, beam 3) is greater than the comprehensive indicator threshold (T1, beam 3) is checked, but the verification result (T2, beam 3) is less than the comprehensive indicator threshold (T2, beam 3), and the verification result (T3, beam 3) is less than the comprehensive indicator threshold (T3, beam 3). In this case, calculation is ended.

It can be determined that, the measured number of successful verifications of the first dimension is 3 and the measured number of successful verifications of the second dimension is 2.

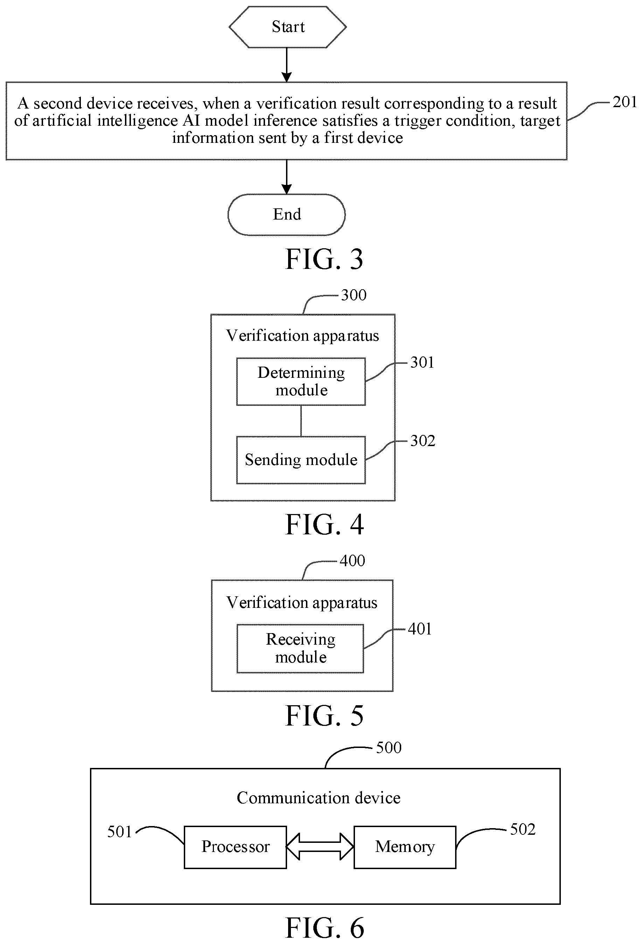

FIG. 3 is a flowchart of a verification method according to an embodiment of this application. As shown in FIG. 3, the verification method includes the following steps.

Step 201: A second device receives, in a case that a verification result corresponding to a result of artificial intelligence AI model inference satisfies a trigger condition, target information sent by a first device, where the target information indicates the verification result, where

the verification result is determined based on a verification requirement for the model inference result, and the verification requirement indicates a requirement for verifying at least one dimension of data of the model inference result.

It should be noted that this embodiment is an implementation of a corresponding second device in the embodiment shown in FIG. 2. For a specific implementation of this embodiment, reference can be made to related descriptions in the embodiment shown in FIG. 2. To avoid repeated descriptions, details are not repeated in this embodiment. Embodiments of this application can improve an inference and prediction effect of the AI model.

In the verification method provided in embodiments of this application, an execution entity may be a verification apparatus. In embodiments of this application, that the verification apparatus performs the verification method is used as an example, to describe the verification apparatus provided in embodiments of this application.

FIG. 4 is a structural diagram of a verification apparatus according to an embodiment of this application. A first device includes the verification apparatus. As shown in FIG. 4, the verification apparatus 300 includes:
a determining module 301, configured to obtain a verification requirement and a trigger condition for a result of artificial intelligence AI model inference, and determine, based on the verification requirement, a verification result corresponding to the model inference result, where the verification requirement indicates a requirement for verifying at least one dimension of data of the model inference result; and
a sending module 302, configured to send target information to a second device in a case that the verification result satisfies the trigger condition, where the target information indicates the verification result.

Optionally, the trigger condition includes at least one of the following:
a verification indicator; and
a minimum number of verifications.

Optionally, the verification indicator includes at least one of the following:
an indicator threshold of each piece of dimension data via model inference;
an indicator threshold vector of each dimension of data via the AI model inference; and
a comprehensive indicator threshold of a plurality of dimensions of data via the AI model inference.

Optionally, the determining module is specifically configured to:
receive the verification requirement and the trigger condition for the result of the AI model inference sent by a third device; and
determine, based on the verification requirement, a verification result corresponding to the model inference result.

Optionally, the verification requirement is configured for verifying at least one of the following:
validity of AI model inference; and
whether the AI model inference is invalid.

Optionally, the verification requirement includes at least one of the following:
a dimension of data output by AI model inference;
a number of dimensions of data output by the AI model inference and an order of the dimensions of data output by the AI model inference;
a target sorting manner of data in each dimension of data output by the AI model inference;
a maximum number of pieces of data in each dimension of data output by the AI model inference; and
an interval of data in each dimension of data output by the AI model inference.

Optionally, the dimension output by the AI model inference includes at least one of the following:
a time dimension;
a frequency dimension;
a cell dimension;
a beam dimension;
a delay dimension; and
a Doppler dimension.

Optionally, the verification requirement includes at least one of the following:
a label data indication of the AI model;
a label delay indication of the AI model;
an output data processing indication of the AI model;
verification duration;
a number of verification samples; and
a calculation manner of a verification indicator.

Optionally, a label data indication of the AI model indicates at least one of the following:
a reference signal received power RSRP of a beam channel;
reference signal received quality RSRQ of the beam channel;
a signal-to-interference and noise ratio SINR of the beam channel;
RSRP of a cell channel;
RSRQ of the cell channel;
SINR of the cell channel;
a received signal strength indication RSSI of the cell channel;
an impulse response of the cell channel;
a precoding matrix indicator PMI;
a rank indicator RI; and
a channel quality indicator CQI.

Optionally, the target information includes at least one of the following:
a number of actually measured and verified for each dimension of data via AI model inference ;
a sorting result of data that is in each dimension of data via the AI model inference and that is sorted in a target sorting manner;
a comprehensive inference result of a plurality of dimensions of data via the AI model inference;
an indicator threshold of each dimension of data via the AI model inference;
a comprehensive indicator threshold of a plurality of dimensions of data via the AI model inference;
a verification result of the plurality of dimensions of data via the AI model inference;
a label data indication of the AI model;
a label delay indication of the AI model;
an output data processing indication of the AI model;
verification duration;
a number of verification samples; and
a calculation manner of a verification indicator;
an invalid indicator;
a valid indicator; and
a minimum number of verifications.

Optionally, a label delay of the AI model indicates at least one of the following:
a delay between an end of the model inference and obtaining label data; and
a delay between receiving input data of the AI model and obtaining the label data.

Optionally, the trigger condition includes a comprehensive indicator threshold of a plurality of dimensions of AI model inference. The determining module is specifically configured to:
obtain a verification requirement and a trigger condition for an inference result of the artificial intelligence AI model; and
verify the model inference result based on the verification requirement, to obtain verification results of the plurality of dimensions, where data structures of the verification results are the same as that of the comprehensive indicator threshold.

Optionally, the trigger condition further includes the minimum number of verifications. The sending module is specifically configured to:
determine a measured number of successful verifications of each dimension of data via the AI model inference based on the verification results of the plurality of dimensions and the comprehensive indicator threshold; and
send the number of pieces of actually measured and verified data to the second device in a case that the number of pieces of actually measured and verified data is greater than or equal to the minimum number of verifications.

Optionally, the sending module is further configured to:
send the target information to the second device in a case that a target dimension exists in multi-dimensions of output data of model inference, where a verification result of the target dimension and a comprehensive indicator threshold corresponding to the target dimension satisfy a pre-defined condition.

In the verification apparatus in this embodiment of this application, the first device verifies the data in the at least one dimension output by the AI model, and reports the data in the at least one dimension output by the AI model to the second device in a case that the verification result satisfies the trigger condition, so that the AI model can be verified on an inference device, to improve an inference and prediction effect of the AI model.

The verification apparatus in embodiments of this application may be an electronic device, for example, an electronic device having an operating system, or may be a component in the electronic device, for example, an integrated circuit or a chip. The electronic device may be a terminal, or may be a device other than the terminal. For example, the terminal may include, but is not limited to, a type of the terminal 11 listed above. Another device may be a server, a network attached storage (Network Attached Storage, NAS), or the like. This is not specifically limited in embodiments of this application.

The verification apparatus provided in this embodiment of this application may implement various processes of the method embodiment in FIG. 2, and achieve the same technical effect. To avoid repetition, details are not described herein again.

FIG. 5 is a structural diagram of a verification apparatus according to an embodiment of this application. A second device includes the verification apparatus. As shown in FIG. 5, the verification apparatus 400 includes:
a receiving module 401, configured to receive, by the second device in a case that a verification result corresponding to a result of artificial intelligence AI model inference satisfies a trigger condition, target information sent by a first device, where the target information indicates the verification result, where
the verification result is determined based on a verification requirement for the model inference result, and the verification requirement indicates a requirement for verifying at least one dimension of data of the model inference result.

In the verification apparatus in this embodiment of this application, an inference and prediction effect of the AI model can be improved.

The verification apparatus in embodiments of this application may be an electronic device, for example, an electronic device having an operating system, or may be a component in the electronic device, for example, an integrated circuit or a chip. The electronic device may be a terminal, or may be a device other than the terminal. For example, the terminal may include, but is not limited to, a type of the terminal 11 listed above. Another device may be a server, a network attached storage (Network Attached Storage, NAS), or the like. This is not specifically limited in embodiments of this application.

The verification apparatus provided in this embodiment of this application may implement various processes of the method embodiment in FIG. 3, and achieve the same technical effect. To avoid repetition, details are not described herein again.

Optionally, as shown in FIG. 6, embodiments of this application further provide a communication device 500, including a processor 501 and a memory 502, where a program or instructions, executable on the processor 501, are stored in the memory 502. For example, when the communication device 500 is a first device, the program or the instructions, when executed by the processor 501, implement the steps of the verification method embodiments applied to the first device, and can achieve the same technical effect. When the communication device 500 is a second device, the program or instructions, when executed by the processor 501, implement the steps of the verification method embodiments applied to the second device, and can achieve the same technical effect. To avoid repetition, details are not described herein again.

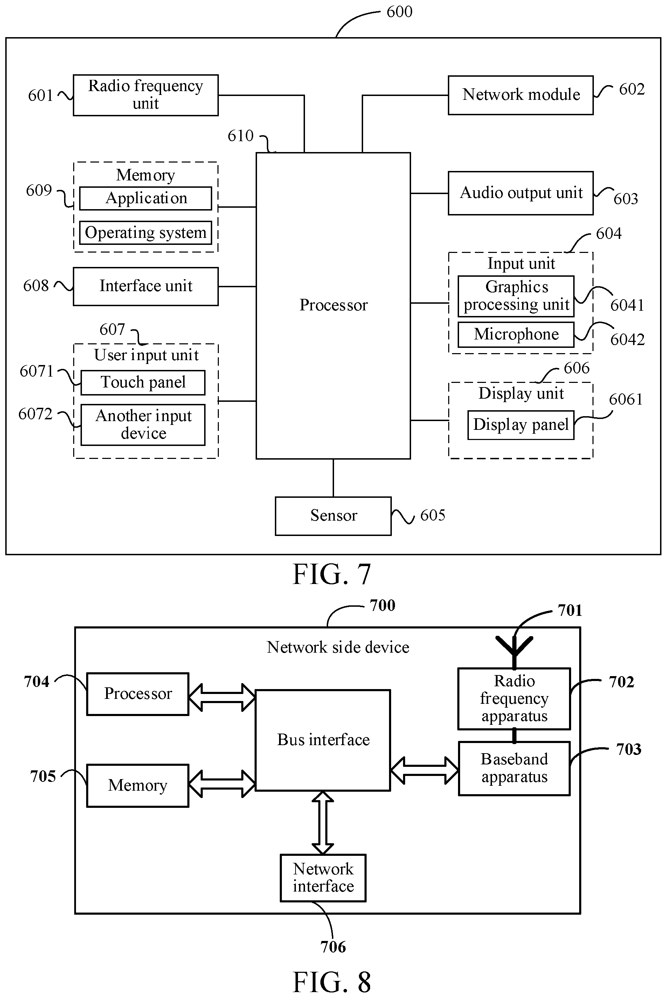

Embodiments of this application further provide a terminal. The terminal may be a first device, including a processor and a communication interface. The processor is configured to: obtain a verification requirement and a trigger condition for a result of artificial intelligence AI model inference, and determine, based on the verification requirement, a verification result corresponding to the model inference result, where the verification requirement indicates a requirement for verifying at least one dimension of data of the model inference result; and the communication interface is configured to send target information to a second device in a case that the verification result satisfies the trigger condition, where the target information indicates the verification result. This terminal embodiment corresponds to the first device side method embodiment. Each implementation process and implementation of the method embodiment may be applied to the terminal embodiment, and can achieve the same technical effect. Specifically, FIG. 7 is a schematic diagram of a hardware structure of a terminal according to an embodiment of this application.

The terminal 600 includes, but is not limited to, at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include the power supply (such as a battery) for supplying power to the components. The power supply may be logically connected to the processor 610 by a power management system, thereby implementing functions such as charging, discharging, and power consumption management by using the power management system. A terminal structure shown in FIG. 7 does not constitute a limitation to the terminal, and the terminal may include more or fewer components than those shown in the figure, or some components may be combined, or a different component deployment may be used, and details are not repeated herein.

It should be understood that, in this embodiment of this application, the input unit 604 may include a graphics processing unit (Graphics Processing Unit, GPU) 6041 and a microphone 6042. The graphics processing unit 6041 performs processing on image data of a static picture or a video that is obtained by an image acquisition apparatus (for example, a camera) in a video acquisition mode or an image acquisition mode. The display unit 606 may include a display panel 6061, and the display panel 6061 may be configured by using a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include, but not limited to, a physical keyboard, a functional key (such as a volume control key or a switch key), a track ball, a mouse, and a joystick, which are not described herein in detail.

In embodiments of this application, after receiving downlink data from the network side device, the radio frequency unit 601 may transmit the downlink data to the processor 610 for processing. In addition, the radio frequency unit 601 may transmit uplink data to the network side device. Generally, the radio frequency unit 601 includes, but is not limited to, an antenna, an amplifier, a transceiver, a coupler, a low noise amplifier, a duplexer, and the like.

The memory 609 may be configured to store a software program or an instruction and various data. The memory 609 may mainly include a first storage area storing a program or instructions and a second storage area storing data. The first storage area may store an operating system, an application program or instructions required by at least one function (such as a sound playback function and an image display function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 609 in this embodiment of this application includes but is not limited to these memories and any other suitable types of memories.

The processor 610 may include one or more processing units; and optionally, the processor 610 integrates an application processor and a modem processor. The application processor mainly processes operations relating to an operating system, a user interface, an application program, and the like. The modem processor mainly processes a wireless communication signal, such as a baseband processor. It may be understood that, the foregoing modem processor may also not be integrated into the processor 610.

The terminal may be a first device.

The processor 610 is configured to obtain a verification requirement and a trigger condition for a result of artificial intelligence AI model inference, and determine, based on the verification requirement, a verification result corresponding to the model inference result, where the verification requirement indicates a requirement for verifying at least one dimension of data of the model inference result; and
the radio frequency unit 601 is configured to send target information to a second device in a case that the verification result satisfies the trigger condition, where the target information indicates the verification result.

Optionally, the trigger condition includes at least one of the following:
a verification indicator; and
a minimum number of verifications.

Optionally, the verification indicator includes at least one of the following:
an indicator threshold of each piece of dimension data via model inference;
an indicator threshold vector of each dimension of data via the AI model inference; and
a comprehensive indicator threshold of a plurality of dimensions of data via the AI model inference.

Optionally, the radio frequency unit 601 is further configured to:
receive the verification requirement and the trigger condition for the result of the AI model inference sent by a third device.

Optionally, the verification requirement is configured for verifying at least one of the following:
validity of AI model inference; and
whether the AI model inference is invalid.

Optionally, the verification requirement includes at least one of the following:
a dimension of data output by AI model inference;
a number of dimensions of data output by the AI model inference and an order of the dimensions of data output by the AI model inference;
a target sorting manner of data in each dimension of data output by the AI model inference;
a maximum number of pieces of data in each dimension of data output by the AI model inference; and
an interval of data in each dimension of data output by the AI model inference.

Optionally, the dimension output by the AI model inference includes at least one of the following:
a time dimension;
a frequency dimension;
a cell dimension;
a beam dimension;
a delay dimension; and
a Doppler dimension.

Optionally, the verification requirement includes at least one of the following:
a label data indication of the AI model;
a label delay indication of the AI model;
an output data processing indication of the AI model;
verification duration;
a number of verification samples; and
a calculation manner of a verification indicator.

Optionally, a label data indication of the AI model indicates at least one of the following:
a reference signal received power RSRP of a beam channel;
reference signal received quality RSRQ of the beam channel;
a signal-to-interference and noise ratio SINR of the beam channel;
RSRP of a cell channel;
RSRQ of the cell channel;
SINR of the cell channel;
a received signal strength indication RSSI of the cell channel;
an impulse response of the cell channel;
a precoding matrix indicator PMI;
a rank indicator RI; and
a channel quality indicator CQI.

Optionally, the target information includes at least one of the following:
a number of actually measured and verified for each dimension of data via AI model inference ;
a sorting result of data that is in each dimension of data via the AI model inference and that is sorted in a target sorting manner;
a comprehensive inference result of a plurality of dimensions of data via the AI model inference;
an indicator threshold of each dimension of data via the AI model inference;
a comprehensive indicator threshold of a plurality of dimensions of data via the AI model inference;
a verification result of the plurality of dimensions of data via the AI model inference;
a label data indication of the AI model;
a label delay indication of the AI model;
an output data processing indication of the AI model;
verification duration;
a number of verification samples; and
a calculation manner of a verification indicator;
an invalid indicator;
a valid indicator; and
a minimum number of verifications.

Optionally, a label delay of the AI model indicates at least one of the following:
a delay between an end of the model inference and obtaining label data; and
a delay between receiving input data of the AI model and obtaining the label data.

Optionally, the trigger condition includes a comprehensive indicator threshold of a plurality of dimensions of AI model inference. The processor 610 is further configured to:
verify the model inference result based on the verification requirement, to obtain verification results of the plurality of dimensions, where data structures of the verification results are the same as that of the comprehensive indicator threshold.

Optionally, the trigger condition further includes a minimum number of verifications. The processor 610 is further configured to: determine a measured number of successful verifications of each dimension of data via the AI model inference based on the verification results of the plurality of dimensions and the comprehensive indicator threshold; and
the radio frequency unit 601 is further configured to send the number of pieces of actually measured and verified data to the second device in a case that the number of pieces of actually measured and verified data is greater than or equal to the minimum number of verifications.

Optionally, the radio frequency unit 601 is further configured to send the target information to the second device in a case that a target dimension exists in multi-dimensions of output data of model inference, where a verification result of the target dimension and a comprehensive indicator threshold corresponding to the target dimension satisfy a pre-defined condition.

Embodiments of this application further provide a network side device, including a processor and a communication interface, where the processor is configured to: obtain a verification requirement and a trigger condition for a result of artificial intelligence AI model inference, and determine, based on the verification requirement, a verification result corresponding to the model inference result, where the verification requirement indicates a requirement for verifying at least one dimension of data of the model inference result; and the communication interface is configured to send target information to a second device in a case that the verification result satisfies the trigger condition, where the target information indicates the verification result. Alternatively, the communication interface is configured to: receive, in a case that a verification result corresponding to a result of artificial intelligence AI model inference satisfies a trigger condition, target information sent by a first device, where the target information indicates the verification result, where the verification result is determined based on a verification requirement for the model inference result, and the verification requirement indicates a requirement for verifying at least one dimension of data of the model inference result. The network side device embodiment corresponds to the first device side method embodiment or the second device side method embodiment. Each implementation process and implementation of the method embodiment may be applied to the network side device embodiment, and can achieve the same technical effect.

Specifically, embodiments of this application further provide a network side device. As shown in FIG. 8, the network side device 700 includes an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701, and transmits the received information to the baseband apparatus 703 for processing. In a downlink direction, the baseband apparatus 703 performs processing on the to-be-sent information, and transmits the to-be-sent information to the radio frequency apparatus 702. After performing processing on the received information, the radio frequency apparatus 702 transmits the received information out through the antenna 701.

The method performed by the network side device in the foregoing embodiments may be implemented in the baseband apparatus 703. The baseband apparatus 703 includes a baseband processor.

The baseband apparatus 703 may include, for example, at least one baseband board. A plurality of chips are disposed on the baseband board. One chip is, for example, the baseband processor, and is connected to the memory 705 via a bus interface, to invoke a program in the memory 705, to perform the network device operations shown in the foregoing method embodiments.

The network side device may further include a network interface 706. The interface is, for example, a common public radio interface (common public radio interface, CPRI).

Specifically, the network side device 700 in embodiments of the present invention further includes: instructions or a program stored in the memory 705 and executable on the processor 704. The processor 704 invokes the instructions or program in the memory 705 to perform the method performed by each module shown in FIG. 4 or FIG. 5, and achieves the same technical effect. To avoid repetition, details are not described herein again.

Embodiments of this application further provide a readable storage medium, where the readable storage medium stores a program or instructions. The program or the instructions, when executed by a processor, implement the various processes of the verification method embodiment, and may achieve the same technical effect. To avoid repetition, details are not described herein again.

The processor is a processor in the terminal described in the foregoing embodiment. The readable storage medium includes a computer-readable storage medium, for example, a computer read-only memory ROM, a random access memory RAM, a magnetic disk, or an optical disc.

Embodiments of this application further provide a chip. The chip includes a processor and a communication interface. The communication interface is coupled to the processor. The processor is configured to run a program or instructions, to implement various processes of the verification method embodiment, and may implement the same technical effect. To avoid repetition, details are not described herein again.

It should be understood that, the chip mentioned in embodiments of this application may be further referred to as a system-level chip, a system chip, a chip system, a system-on-chip, or the like.

Embodiments of this application further provide a computer program/program product, where the computer program/program product is stored in a storage medium, and the computer program/program product is executed by at least one processor to implement the processes of the foregoing verification method, and can achieve the same technical effect. To avoid repetition, details are not described herein again.

Embodiments of this application further provide a verification system, including: a first device and a second device. The first device may be configured to perform the steps of the verification method on the first device side as described above. The second device may be configured to perform the steps of the verification method on the second device side as described above.

It should be noted that, the terms "include", "comprise" or any other variants mean to cover the non-exclusive inclusion, so that the processes, methods, objects, or apparatuses which include a series of elements not only include those elements, but also include other elements which are not clearly listed, or include inherent elements of the processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the related art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in embodiments of this application.

Although embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A verification method, comprising:
obtaining, by a first device, a verification requirement and a trigger condition for a model inference result of AI model inference, and determining, based on the verification requirement, a verification result corresponding to the model inference result, wherein the verification requirement indicates a requirement for verifying at least one dimension of data of the model inference result; and
sending target information to a second device in a case that the verification result satisfies the trigger condition, wherein the target information indicates the verification result.

2. The method according to claim 1, wherein the trigger condition comprises at least one of the following:
a verification indicator; and
a minimum number of verifications.

3. The method according to claim 2, wherein the verification indicator comprises at least one of the following:
an indicator threshold of each dimension of data via the AI model inference;
an indicator threshold vector of each dimension of data via the AI model inference; and
a comprehensive indicator threshold of a plurality of dimensions of data via the AI model inference.

4. The method according to claim 1, wherein the obtaining, by a first device, a verification requirement and a trigger condition for a model inference result of AI model inference comprises:
receiving, by the first device, the verification requirement and the trigger condition for the model inference result of the AI model inference sent by a third device.

5. The method according to claim 1, wherein the verification requirement is configured for verifying at least one of the following:
validity of the AI model inference; and
whether the AI model inference is invalid.

6. The method according to claim 1, wherein the verification requirement comprises at least one of the following:
a dimension of data output by the AI model inference;
a number of dimensions of data output by the AI model inference and an order of the dimensions of data output by the AI model inference;
a target sorting manner of data in each dimension of data output by the AI model inference;
a maximum number of pieces of data in each dimension of data output by the AI model inference; and
an interval of data in each dimension of data output by the AI model inference.

7. The method according to claim 6, wherein the dimension output by the AI model inference comprises at least one of the following:
a time dimension;
a frequency dimension;
a cell dimension;
a beam dimension;
a delay dimension; and
a Doppler dimension.

8. The method according to claim 1, wherein the verification requirement comprises at least one of the following:
a label data indication of the AI model;
a label delay indication of the AI model;
an output data processing indication of the AI model;
verification duration;
a number of verification samples; and
a calculation manner of a verification indicator.

9. The method according to claim 6, wherein a label data indication of the AI model indicates at least one of the following:
RSRP of a beam channel;
RSRQ of the beam channel;
SINR of the beam channel;
RSRP of a cell channel;
RSRQ of the cell channel;
SINR of the cell channel;
RSSI of the cell channel;
an impulse response of the cell channel;
PMI;
RI; and
CQI.

10. The method according to claim 1, wherein the target information comprises at least one of the following:
a number of actually measured and verified for each dimension of data via the AI model inference;
a sorting result of data that is in each dimension of data via the AI model inference and that is sorted in a target sorting manner;
a comprehensive inference result of a plurality of dimensions of data via the AI model inference;
an indicator threshold of each dimension of data via the AI model inference;
a comprehensive indicator threshold of a plurality of dimensions of data via the AI model inference;
a verification result of the plurality of dimensions of data via the AI model inference;
a label data indication of the AI model;
a label delay indication of the AI model;
an output data processing indication of the AI model;
verification duration;
a number of verification samples; and
a calculation manner of a verification indicator;
an invalid indicator;
a valid indicator; and
a minimum number of verifications.

11. The method according to claim 10, wherein the label delay indication of the AI model indicates at least one of the following:
a delay between an end of the model inference and obtaining label data; and
a delay between receiving input data of the AI model and obtaining the label data.

12. The method according to claim 1, wherein the trigger condition comprises a comprehensive indicator threshold of a plurality of dimensions of the AI model inference, and the determining, based on the verification requirement, a verification result corresponding to the model inference result comprises:
verifying the model inference result based on the verification requirement, to obtain verification results of the plurality of dimensions, wherein data structures of the verification results are the same as that of the comprehensive indicator threshold.

13. The method according to claim 12, wherein the trigger condition further comprises a minimum number of verifications, and the sending target information to a second device in a case that the verification result satisfies the trigger condition comprises:
determining a measured number of successful verifications of each dimension of data via the AI model inference based on the verification results of the plurality of dimensions and the comprehensive indicator threshold; and
sending the number of pieces of actually measured and verified data to the second device in a case that the number of pieces of actually measured and verified data is greater than or equal to the minimum number of verifications.

14. The method according to claim 12, wherein the sending target information to a second device in a case that the verification result satisfies the trigger condition comprises:
sending the target information to the second device in a case that a target dimension exists in multi-dimensions of output data of model inference, wherein a verification result of the target dimension and a comprehensive indicator threshold corresponding to the target dimension satisfy a pre-defined condition.

15. A verification method, comprising:
receiving, by a second device in a case that a verification result corresponding to a model inference result of AI model inference satisfies a trigger condition, target information sent by a first device, wherein the target information indicates the verification result, wherein
the verification result is determined based on a verification requirement for the model inference result, and the verification requirement indicates a requirement for verifying at least one dimension of data of the model inference result.

16. A verification apparatus comprised in a first device, the verification apparatus comprising:
a determining module, configured to obtain a verification requirement and a trigger condition for a model inference result of AI model inference, and determine, based on the verification requirement, a verification result corresponding to the model inference result, wherein the verification requirement indicates a requirement for verifying at least one dimension of data of the model inference result; and
a sending module, configured to send target information to a second device in a case that the verification result satisfies the trigger condition, wherein the target information indicates the verification result.

17. A verification apparatus comprised in a second device, the verification apparatus comprising:
a receiving module, configured to receive, in a case that a verification result corresponding to a model inference result of AI model inference satisfies a trigger condition, target information sent by a first device, wherein the target information indicates the verification result, wherein
the verification result is determined based on a verification requirement for the model inference result, and the verification requirement indicates a requirement for verifying at least one dimension of data of the model inference result.

18. A first device, comprising a processor and a memory, wherein the memory stores a program or instructions executable on the processor, and the program or the instructions, when executed by the processor, implement the steps of the verification method according to any one of claims 1 to 14.

19. A second device, comprising a processor and a memory, wherein the memory stores a program or instructions executable on the processor, and the program or the instructions, when executed by the processor, implement the steps of the verification method according to claim 15.

20. A readable storage medium, wherein the readable storage medium stores a program or instructions, and the program or the instructions, when executed by a processor, implement the steps of the verification method according to any one of claims 1 to 14 or implement the steps of the verification method according to claim 15.
